# EUROPEAN PATENT SPECIFICATION

(11) **EP 3 263 614 B1**
(45) Date of publication and mention of the grant of the patent: **30.10.2019**
(21) Application number: 16177088.8
(22) Date of filing: 30.06.2016
(51) Int. Cl.: C08G 18/48, C08G 18/61, C08G 18/72, C08G 18/75, C08G 18/08, C08G 18/12, C08G 18/34, C08G 18/40, C08G 18/42

(54) **WATERBORNE HYBRID POLYURETHANE/POLYSILOXANE DISPERSIONS**
WÄSSRIGE HYBRIDE POLYURETHAN-/POLYSILOXANDISPERSIONEN
DISPERSIONS DE POLYSILOXANE/POLYURÉTHANE HYBRIDE À BASE AQUEUSE

(43) Date of publication of application: 03.01.2018
(73) Proprietor: Henkel AG & Co. KGaA, 40589 Düsseldorf (DE)
(72) Inventor: ZHAO, Ligang, 40593 Düsseldorf (DE); GIMENO GORMAZ, Nélida, 50010 Zaragoza (ES); PÉREZ BRIONES, Aurora, 03780 Pego (ES); SAUCA, Sorin N., Timisoara 300152 (RO); KLEIN, Johann, 40593 Düsseldorf (DE); DESPOTOPOULOU, Christina, 40477 Düsseldorf (DE)

(56) References cited:
- EP-A1- 0 742 803
- US-A- 5 750 630
- US-A- 6 072 019

## Description

The present invention relates to aqueous polyurethane/polysiloxane hybrid polymer dispersions that can be used as adhesives or coatings, are surfactant and solvent free and have low VOC emissions, are environmentally friendly, are cost-efficient, and provide for homogeneous, waterproof and aging-resistant film formation after drying. As hybrid materials, they provide for a versatile system that can be finely tuned and combines the advantageous properties of polyurethane and polysiloxane materials. Also encompassed are processes for their production, compositions containing them, and their use as coatings and adhesives.

Polyurethane/polysiloxane hybrid waterborne dispersions are innovative materials that combine in a unique system the typical properties of the two different polymeric components, resulting in most cases in materials with improved properties. Polyurethanes (PU) provide chemical resistance, good film formation properties, toughness, flexibility or superior low-temperature impact resistance. However, they exhibit poor water resistance and low thermal stability. On the other hand, silicone derivative materials present high thermal and oxidative stability, low surface energy, wide service temperature range, aging resistance, corrosion resistance, good UV stability and good water resistance.

Hybrid waterborne polyurethane/polysiloxane dispersions, in particular hybrid waterborne polyurethane/polydimethylsiloxane (PU/PDMS) dispersions could combine the beneficial properties of both without many of the disadvantages. However, the different nature of the nonpolar polysiloxane and the highly polar urethane segments gives rise to problems in terms of phase separation in the process of preparing the hybrid waterborne dispersions.

This incompatibility between silicone and organic segments has restrained the development of hybrid polyurethane/polysiloxane dispersions. In most cases, silicone derivatives (siloxanes, but mainly silanes) are introduced as chain extenders in the final step of the preparation of the polyurethane dispersions. Thus, the amount of silicone moieties in the final product is very low. Moreover, the effect on the final performance of the material is limited and it is essentially used as a crosslinking point. In order to better taking advantage of the extraordinary properties of silicones (low temperature resistance, low surface energy, good water resistance, aging resistance, corrosion resistance, good UV stability, physiological inertness, biocompability, etc.), it is desirable to introduce the silicone units as part of the soft segments of the polyurethane backbone. In this way, a synergetic effect of the organic and silicone parts is shown in the final hybrid polyurethane/polysiloxane dispersions. Moreover, the high cost of silicones can be reduced by mixing it with cheaper polyether, polyester or polycarbonate poylols.

Several attempts have been reported to prepare this type of polyurethane/polysiloxane materials. In US2009/0118455, hybrid polydimethylsiloxane/polyurethane dispersions are reported. However, the preparation is restricted to mixtures of the polydimethylsiloxane polyol of hydrophobic polyethers and polyester polyols and methylene diphenyl diisocyanate (MDI). Moreover, a high boiling point solvent (dimethylacetamide) is used as a solvent to favor the dispersion preparations. This solvent is not removed after preparation of the dispersion, thus resulting in an environmentally unfriendly formulation.

In US2003/0198819, an organic solvent (NMP) is also used in the process of preparation of the aqueous dispersions of polysiloxane-polyurethanes. This solvent is not removed and remains in the final dispersion. Moreover, the amount of polymethylsiloxane is restricted to 3-25 wt.-%, which represents a limitation for polymers that need higher contents of siloxane units.

In US2008/0305342, amine-functionalized polysiloxane is introduced in preformed polyurethane prepolymer to yield a hybrid prepolymer. However, the molecular weight (Mw) of the polysiloxane is limited to 1500 g/mol. Moreover, the amount of silicone content by weight in the final solid is limited to 2.5 %.

In US2015/0275038 and US2015/0275039, non-fluoro hydrophobic aqueous polyurethane dispersions and their application are provided. In one case, a self-emulsifying PDMS-containing aqueous dispersion is described. However, this is a pure PDMS polyurethane and no other polyols are used in the preparation. Similarly, in WO 20103158863 A2, non-fluorinated polyurethanes based on pure polydimethylsiloxane polyols are described. Again, PDMS polyols are used as the main component of the polyurethane together with organic polyoxy units including ionizable moieties. No other polyols, such as polyether, polyester, or polycarbonate polyols are incorporated. Moreover, chain extension is performed either with water or alcohols. Final solid contents are adjusted to 25 %, which is a very low value in this type of dispersions.

EP 0742803 A1, US 5750630 A and US 6072019 A disclose water-soluble or water-dispersible polyurethane compounds and compositions, which are useful as low adhesion backsize for adhesive tapes.

The present invention described herein solves the aforementioned issues, allowing for the production of waterborne polyurethane/polysiloxane, in particular polyurethane/polydimethylsiloxane dispersions, in which the ratio of polyurethane/polysiloxane can be modulated on demand. Moreover, no surfactants, no organic solvent or small amounts of low boiling point organic solvents are used to yield solvent-free, environmentally friendly dispersions. The process can be applied to polyurethane/polysiloxane polyols, in particular polyurethane/polydimethylsiloxane polyols of a wide range of molecular weight in combination with other organic polyols, preferably polyether, polyesters or polycarbonate polyols. In this way, cheaper silicone derivatives can be developed. The final dispersion has excellent compatibility with other additives, fillers, polymers, etc. and can be used as a main component of formulations to be used as high performance sealants, coatings or adhesives, where excellent mechanical properties are required.

In a first aspect, the present invention thus relates to a process for manufacturing an aqueous polyurethane/polysiloxane dispersion comprising the steps of:
(1) forming a polyurethane/polysiloxane prepolymer from a reaction mixture comprising:
   (a) at least one polysiloxane polyol with a number average molecular weight Mₙ in the range of 500 g/mol to 10,000 g/mol;
   (b) at least one organic polyol with a number average molecular weight Mₙ in the range of 400 g/mol to 10,000 g/mol, preferably 1000 g/mol to 3000 g/mol;
   (c) at least one stabilizer; and
   (d) at least one polyisocyanate, wherein the at least one polyisocyanate is used in molar excess relative to the hydroxy groups of the other components of the reaction mixture to obtain a polyurethane/polylsiloxane prepolymer;
(2) dispersing the prepolymer obtained from step (1) into a continuous aqueous phase to obtain an emulsion; and
(3) reacting the prepolymer with at least one chain extension agent,
wherein the aqueous polyurethane/polysiloxane dispersion is essentially free of organic solvent.

In another aspect, the invention relates to the aqueous polyurethane/polysiloxane hybrid polymer dispersion obtainable according to the process described herein.

Further aspects of the invention relate to adhesive or coating compositions that contain the aqueous polyurethane/polysiloxane hybrid polymer dispersion disclosed herein and the use of the aqueous polyurethane/polysiloxane hybrid polymer dispersion in adhesives and coatings.

"One or more", as used herein, relates to at least one and comprises 1, 2, 3, 4, 5, 6, 7, 8, 9 or more of the referenced species. Similarly, "at least one" means one or more, i.e. 1, 2, 3, 4, 5, 6, 7, 8, 9 or more. "At least one", as used herein in relation to any component, refers to the number of chemically different molecules, i.e. to the number of different types of the referenced species, but not to the total number of molecules. For example, "at least one polyol" means that at least one type of molecule falling within the definition for a polyol is used but that also two or more different molecule types falling within this definition can be present, but does not mean that only one molecule of said polyol is present.

In the present specification, the terms "a" and "an" and "at least one" are the same as the term "one or more" and are used interchangeably.

The aqueous polyurethane/polysiloxane dispersion according to the present invention is essentially free of organic solvent.

The term "essentially free" within the context of this invention is to be interpreted as the respective compound is contained in the composition in an amount of less than 5 wt.-%, 4 wt.-%, 3 wt.-%, 2 wt.-%, 1.5 wt.-%, 1 wt.-%, 0.75 wt.-%, 0.5 wt.-%, 0.25 wt.-%, or 0.1 wt.-%, based on the total weight of the composition, wherein the amounts are respectively more preferred in descending order. For example, 4 wt.-% is more preferred than 5 wt.-% and 3 wt.-% is more preferred than 4 wt.-%.

In the present invention the molar ratio of the isocyanate (NCO) groups of the polyisocyanate to the sum of the hydroxyl (OH) groups of the polysiloxane polyol and the organic polyol is also referred to as NCO:OH, unless explicitly stated otherwise.

If reference is made herein to a molecular weight, this reference refers to the number average molecular weight Mₙ, if not explicitly stated otherwise. The number average molecular weight Mₙ can be calculated based on end group analysis (OH numbers according to DIN 53240) or can be determined by gel permeation chromatography according to DIN 55672-1:2007-08 with THF as the eluent. If not stated otherwise, all given molecular weights are those determined by end group analysis. The weight average molecular weight M_{w} can be determined by GPC, as described for Mₙ.

All percentages given herein in relation to the compositions or formulations relate to weight % relative to the total weight of the respective composition or formula, if not explicitly stated otherwise.

In the context of the present invention, the at least one polysiloxane polyol according to item (a) to be employed in the reaction forming the polyurethane/polysiloxane prepolymer of the aqueous polyurethane/polysiloxane hybrid polymer dispersion is a, preferably linear, polysiloxane having terminal hydroxyl functions, such as, α,ω-hydroxyalkyl, -alkoxy or -aryl polysiloxane.

According to certain embodiments of the present invention, the polysiloxane polyol (a) is a polysiloxane polyol having a number average molecular weight in the range from 500 g/mol to 10,000 g/mol, preferably from 500 g/mol to 6,000 g/mol, more preferably 1,000 g/mol to 3,500 g/mol, most preferably 1,500 g/mol to 3,500 g/mol.

In preferred embodiments of the present invention, the at least one polysiloxane polyols according to item (a) is a polydimethylsiloxane.

Suitable examples of polydimethylsiloxane (PDMS) polyols to be used in the reaction forming the PDMS/PU prepolymer according to the present invention are preferably, without limitation, EO-PDMS block polyols, such as EO-PDMS block polyol of Mw: 1700 (Silfurf Di-1010, Siltech), EO-PDMS block polyol of M_{w} 2900 (Silsurf Di-2510, Siltech), carbinol-ended PDMS polyols, such as carbinol-ended PDMS polyol of M_{w} 3200 (KF-6002, Shinetsu), carbinol-ended PDMS polyol of M_{w} 1800 (KF-6001, Shinetsu), and propyleneglycol-ended PDMS polyol of M_{w} 2872.

The corresponding silanol-functional polydimethylsiloxanes are less preferred on account of the lower reactivity toward isocyanates, but may also be employed in the process according to the present invention.

The at least one organic polyol to be employed in the process according to the present invention is, in various embodiments, a non-functionalized polyol, e.g. contains no functional groups besides the hydroxyl groups. It may be at least one polyester polyol, at least one polyether polyol, or at least one polycarbonate polyol or, preferably, a mixture of two or more thereof. Also contemplated are thus mixtures of two or more polyester polyols and/or two or more polyether polyols. If a mixture of polyether and polyester polyols is used, the weight ratio may range from about 10:1 to 1:10, preferably 1:2 to 2:1.

Polyester polyols that are useful in the processes described herein include those that are obtainable by reacting, in a polycondensation reaction, dicarboxylic acids with polyols. The dicarboxylic acids may be aliphatic, cycloaliphatic or aromatic and/or their derivatives such as anhydrides, esters or acid chlorides. Specific examples of these are succinic acid, glutaric acid, adipic acid, pimelic acid, suberic acid, azelaic acid or sebacic acid, phthalic acid, isophthalic acid, trimellitic acid, phthalic acid anhydride, tetrahydrophthalic acid anhydride, glutaric acid anhydride, maleic acid, maleic acid anhydride, fumaric acid, dimeric fatty acid and dimethyl terephthalate. Examples of suitable polyols are monoethylene glycol, 1,2-propanediol, 1,3-propanediol, 1,4-butanediol, 3-methylpentane-1,5-diol, neopentyl glycol (2,2-dimethyl-1,3-propanediol), 1,6-hexanediol, 1,8-otaneglycol cyclohexanedimethanol, 2-methylpropane-1,3-diol, dithyleneglycol, triethyleneglycol, tetraethyleneglycol, polyethyleneglycol, dipropyleneglycol, polypropyleneglycol, polypropyleneglycol, dibutyleneglycol and polybutyleneglycol. Alternatively, they may be obtained by ring-opening polymerization of cyclic esters, preferably ε-caprolactone.

In various embodiments, the polyester polyol has an average number molecular weight Mₙ in the range of 400 to 5000, preferably 500 to 3000 g/mol, more preferably 800 to 2500 g/mol, most preferably 1000 to 2000 g/mol.

The polyether polyol may be a polyalkylene glycol homo- or copolymer, preferably a polypropylene glycol homo- or copolymer, a polyethylene glycol homo- or copolymer, a polytetramethylene glycol homo- or copolymer, or a polypropylenglycol/polyethyleneglycol block copolymer.

In various embodiments, the polyether polyol has an average number molecular weight of 1000 to 4000, preferably 1000 to 3000 g/mol.

Suitable hydroxyl polycarbonates can be obtained by reaction of carbon acid derivatives, e.g. diphenyl carbonate, dimethyl carbonate or phosgene with diols. Suitable examples of such diols include ethylene glycol, 1,2- and 1,3-propanediol, 1,3- and 1,4-butanediol, 1,6-hexanediol, 1,8-octanediol, neopentyl glycol, 1,4-bishydroxymethyl cyclohexane, 2-methyl-1,3-pro-panediol, 2,2,4-trimethyl pentanediol-1,3, dipropylene glycol, polypropylene glycols, dibutylene glycol, polybutylene glycols, bisphenol A, tetrabromobisphenol A as well as lactone-modified diols. The diol component preferably contains 40 to 100 wt. % hexanediol, preferably 1,6-hexanediol and/or hexanediol derivatives. More preferably, the diol component includes examples that in addition to terminal OH groups display ether or ester groups.

The hydroxyl polycarbonates should be substantially linear. However, they can optionally be slightly branched by the incorporation of polyfunctional components, in particular low-molecular polyols. Suitable examples include glycerol, trimethylol propane, hexanetriol-1,2,6, butanetriol-1,2,4, trimethylol propane, pentaerythritol, quinitol, mannitol, and sorbitol, methyl glycoside, 1,3,4,6-dianhydrohexites.

Suitable polycarbonate polyols are, without limitation, those obtainable under the trademark names Desmophen® C3200 (Bayer) and Kuraray® C2050 (Poly-(3-methyl-1,5-pentanediol, 1,6-hexanediol)carbonate; Kuraray).

The reaction mixture may comprise further polyols, in particular diols. Such diols may be monomeric diols, such as 1,4-butanediol.

In certain embodiments, the weight ratio of polysiloxane polyol to organic polyol is within the range of 99:1 to 1:99, preferably 85:15 to 15:85.

The reaction mixture further comprises at least one stabilizer. The term "stabilizer", as used herein, relates to a class of molecules that can stabilize the droplets in a dispersion or emulsion, i.e. prevent coagulation or coalescence. The stabilizer molecules may adhere to or associate with the droplet surface. In various embodiments, the stabilizer molecules comprise a hydrophilic and a hydrophobic part, with the hydrophobic part interacting with the droplet and the hydrophilic part be exposed to the solvent. Commonly used stabilizers are surfactants and may bear an electric charge, for example may be anionic surfactants or cationic surfactants.

However, to avoid the use of surfactants and also due to the increased stability provided, the processes disclosed herein use stabilizer compounds that are built into the polyurethane/polysiloxane polymer during (pre)polymer formation and thus provide for self-emulsifiable polyurethane/polysiloxane hybrid polymers, which spontaneously form stable dispersions in water without the assistance of external emulsifiers.

Therefore, in various embodiments, the at least one stabilizer may comprise or consist of a polyol, preferably a diol, or a mixture of different polyols and/or diols. Preferred diols are glycols, such as ethylene glycol, propylene glycol, butylene glycol, neopentyl glycol and the like and polymers thereof, such as polyethylene glycol, polypropylene glycol, and polybutylene glycol and copolymers of ethylene glycol, propylene glycol, and butylene glycol, preferably of ethylene glycol and propylene glycol. The average molecular weight M_{w} of such polymeric stabilizers is preferably in the range of up to about 4000 g/mol, preferably up to about 3000 g/mol, more preferably up to about 2000 g/mol. Suitable nonionic ethylene glycol/propylene glycol stabilizers are for example those commercially available under the trademark name Pluronic® from BASF, for example Pluronic PE3500. The nonionic stabilizers may, in various embodiments, have HLB (hydrophile lipophile balance) values between 6 and 19. The HLB values are calculated by calculating the hydrophilic portion of the molecule by dividing the molecular weight of the hydrophilic part of the molecule, such as the alkylene oxide, by the total molecular weight of the molecule and then dividing the obtained percentage by 5. Typical nonionic stabilizers and surfactants for oil-in-water emulsions have HLB values of 8-18.

While the aforementioned stabilizers are nonionic, they are preferably modified by anionic or cationic groups. The presence of such charged groups typically increases the stability of the dispersed polymer droplets or particles. Accordingly, in preferred embodiments, the at least one stabilizer comprises or is an ionic stabilizer. Suitable anionic groups include, but are not limited to acidic groups, such as carboxylic acid or sulfonic acid groups and their respective salts. Concrete compounds suitable as anionic stabilizers in the sense of the present invention are 2,2-bis(hydroxymethyl)propionic acid (dimethylol propionic acid; DMPA) and sulfonated polydiols with a molecular weight M_{w} in the range of up to 1000 g/mol, preferably up to 500 g/mol. Such sulfonated polydiols, for example propoxylated 1-methyl-2-methylol-3-hydroxy-1-propanesulfonate with a molecular weight M_{w} of about 430 g/mol, are commercially available under the name GS-7Q (Yedang G & Co. Ltd).

Suitable cationic groups include, but are not limited to ammonium groups, in particular quaternary ammonium groups. Particularly preferred are alkoxylated, preferably ethoxylated or propoxylated, dialkylammonium diols, such as ethoxylated cocoalkylmethyl ammonium methanesulfonate. Such compounds are commercially available under the trademark name Rewoquat® CPEM from Evonik.

In various embodiments of the invention, the at least one stabilizer can be a mixture of polyols, preferably diols, particularly a mixture of at least one nonionic diol/polyol and at least one anionic or cationic, preferably anionic, diol/polyol. In one specific embodiment, the mixture can comprise at least one ethyleneglycol/propyleneglycol copolymer with a molecular weight M_{w} of up to 3000 g/mol and at least one anionic diol, such as DMPA or a sulfonated polydiol.

In such mixtures, the weight ratio of nonionic to ionic stabilizer usually ranges from about 0:1 to about 20:1.

The term "reaction mixture", as used herein, relates to the mixture of the polyols, including the at least one polysiloxane polyol, the at least one organic polyol, the stabilizer(s) and the polyisocyanate(s). "Polyol mixture", as used herein in relation to the mixture comprising the polyols, relates to a mixture comprising the at least one polysiloxane polyol, the at least one organic polyol and the at least one stabilizer and, optionally, any additional polyols that may be present.

It is preferred that the polyol mixture does not contain any organic solvents or surfactants and no further additives, i.e. consists of polyols, preferably those defined above, and the stabilizers.

In various embodiments, the polyol mixture comprises about 1 to about 99 wt.-%, preferably 15 to 85 wt.-%, of the at least one polysiloxane polyol, or a mixture of different polysiloxane polyols, and about 1 to about 99 wt.-%, preferably 15 to 85 wt.-% of the organic polyol, or a mixture of different organic polyols, for example of polyester polyols and polyether polyols, relative to the weight of the polyol mixture. In preferred embodiments, the at least one polysiloxane polyol is a polydimethylsiloxane polyol, or the mixture of different polysiloxane polyols is a mixture of different polydimethylsiloxane polyols. The stabilizer is usually contained in amounts of about 1 to 30 wt.-%, preferably 10 to 20 wt.-%, relative to the weight of the polyol mixture. If a mixture of stabilizing compounds is employed, ionic stabilizers, preferably anionic stabilizers as defined above, may be used in amounts of 0.1 to 20 wt.-%, preferably 3 to 8 wt.-%, and nonionic stabilizers in amounts of 0 to 30 wt.-%, relative to the polyol mixture.

The final reactant employed in the formation of the polyurethane/polysiloxane prepolymer is a polyisocyanate. Any compound, which includes at least two isocyanate groups, is within the contemplation of the present invention. It is preferable, however, that the polyisocyanate be a diisocyanate. The incorporation of small amounts of isocyanate with a functionality higher than two, in particular a triisocyanate, is also contemplated and may under certain circumstances even be advantageous. Such polyisocyanates can act as cross-linkers. In this case, where the polyisocyanate acts as a cross-linker, polyisocyanates based on hexamethylene diisocyanate are preferred. Suitable diisocyanates include, without limitation, methylenediphenyl diisocyanate (MDI), toluene-2,4-diisocyanate (TDI), hexamethylene diisocyanate (HDI), polymeric diphenylmethane diisocyanate (PMDI), isophorone diisocyanate (IPDI), methylene-4,4-bis(cyclohexyl)diisocyanate (H12MDI) and mixtures thereof. Although both aliphatic and aromatic polyisocyanates are within the contemplation of the present invention, it is preferred that the polyisocyanate be an aliphatic polyisocyanate. Thus, in a particularly preferred embodiment, the polyisocyanate is an aliphatic diisocyanate. Among particularly preferred aliphatic diisocyanates are isophorone diisocyanate, hexamethylene diisocyanate, and mixtures thereof. Suitable polyisocyanates are, for example, commercially available under the trademark name Desmodur® from Bayer AG (DE).

The polyisocyanate is used in molar excess relative to the OH groups of all polyols present in the reaction mixture, the OH/NCO equivalent ratio preferably being 1:1.1 to 1:4, more preferably 1:1.2 to 1:1.3. The amount of the at least one polyisocyanate in the reaction mixture is typically in the range of 10 to 20 wt.-% relative to the reaction mixture. The remainder of the reaction mixture may be made up by the polyol mixture, as defined above.

Providing the polyol mixture may include the step of mixing the polyols (a) and (b) and the stabilizers and heating the mixture. The heating may be required in case the polyols employed are solid at room temperature and need to be melted to form the polyol mixture. In preferred embodiments, the polyols and the at least one stabilizer are combined and heated to about 70 to 95°C, for example about 75°C, while stirring the mixture under vacuum to dry. After the mixing, the mixture may be cooled to 60°C for the addition of the isocyanates.

The polyol mixture is subsequently combined with at least one polyisocyanate in the reaction mixture to form the prepolymer. The prepolymer reaction usually occurs at elevated temperature, preferably in the range of between about 55 °C and about 95 °C, more preferably between about 75 °C and about 85 °C, over a period of between about 1 and about 3 hours. The reaction is typically carried out in the presence of a catalyst that is added, preferably a tin-based catalyst, more preferably dimethyldineodecanoatetin, such as Fomrez UL28. In preferred embodiments of the invention, the reaction mixture thus further comprises a catalyst as defined above.

The reaction continues until the free isocyanate content reaches or comes very close to the calculated value, as determined by standard titration with dibutylamine. Preferred values for the free isocyanate content in the prepolymer are in the range between 0.2 and 4 wt.-%, preferably 1 to 3 wt.-% relative to the total amount of polyols, including the stabilizer(s), and polyisocyanate in the mixture.

"About", as used herein, relates to ± 10 %, preferably ± 5 % of the numerical value to which it refers. "About 70 °C" thus relates to 70 ± 7, preferably 70 ± 3.5 °C.

As described above, in the polyurethane/polysiloxane prepolymer-forming reaction, the polyisocyanate is reacted in a concentration in excess of the stoichiometric concentration required to completely react with the hydroxyl groups. The excess used may include an OH/NCO equivalent ratio of 1:1.1 to 1:4. Preferably, the amount of the polyisocyanate is 25 % to 76 % in excess of the stoichiometric concentration required to react completely with the hydroxyl groups.

Once the free isocyanate content reaches the predetermined value, as defined above, the temperature may be reduced, for example to about 60 °C.

In various embodiments, the polyurethane/polysiloxane prepolymer has an average number molecular weight Mₙ of 1000 to 10000, preferably 2000 to 6000 g/mol.

The amounts of the polysiloxane and organic polyol are selected such that the weight proportion of polysiloxane polyol to organic polyol in the final hybrid polymer, meaning the weight proportion of the monomeric units derived from said polyols, is from 99:1 to 1:99, preferably 15:85 to 85:15.

In the process according to the present invention, the resulting prepolymer may be dissolved in a low boiling point organic solvent. In the context of the present invention, a low boiling point organic solvent is an organic solvent having a boiling point of less than about 100 °C, preferably of less than about 90 °C, more preferably of less than about 80 °C, in particular of less than about 70 °C, and most preferably of less than about 60 °C. For instance, the low boiling point organic solvent may be an alkanone, an alkane, a cycloalkane, an alkene, an aryl, or a derivative of the aforementioned. Suitable examples include, without limitation, acetone, ethyl acetate, tetrahydrofurane, pentane, cyclopentane, hexane, cyclohexane, and benzene. In preferred embodiments, the low boiling point organic solvent is miscible with water.

In various embodiments, the prepolymer may be neutralized at this stage by using a suitable neutralization agent. In case an anionic acidic stabilizer is used, an amine base, such as triethylamine may be used.

The polyurethane/polysiloxane prepolymer is then dispersed in a continuous aqueous phase, preferably water. The dispersing step may be carried out at elevated temperature, for example in the range of about 30 to 60 °C, for example at about 40 °C. The dispersing step may include emulsifying the polyurethane/polysiloxane prepolymer into a continuous aqueous phase, preferably water, by mechanical stirring.

Subsequently, the isocyanate end-groups of the prepolymer are reacted with an appropriate chain extension agent comprising at least two terminal NCO-reactive groups and is preferably selected from the group consisting of water, a diol or a diamine and/or a triamine, more preferably hydrazine, an alkylene diamine, a cycloalkylene diamine, an alkyldiol, or a polyetherdiamine, most preferably ethylene diamine, water, isophoronediamine, piperazine or a polyetherdiamine. Diols, such as an alkyldiol, including but not limited to 1,4-butanediol and 2-butyl-2-ethyl-1,3-propanediol, or water can also be used. The chain extension reaction may be performed until essentially total conversion of the isocyanate groups, i.e. the chain extension agent is continuously added until free isocyanate groups are no longer detectable. It is generally preferred that the chain extension reaction is carried out until total conversion of the isocyanate groups. The conversion can be monitored by techniques well-established in the art, for example IR spectroscopy.

The presence of a catalyst and higher temperature may also be required. Preferred chain extension agents useful according to the present invention include ethylene diamine, water, isophorone diamine, and/or a polyetherdiamine.

After chain extension, the low boiling point organic solvent, if present, is removed from the aqueous dispersion. For instance, the removing of the low boiling point organic solvent may involve the evaporation of said solvent.

The aqueous polyurethane/polysiloxane hybrid dispersion formed preferably has a solid content of 20 to 70 wt.-%, preferably 40 to 50 wt.-%. Whenever reference is made herein to a "weight proportion", meant is the weight ratio of the two indicated components. In connection with polyurethane/polysiloxane contents, this ratio refers to the total amount of polyurethane (typically as part of the hybrid polymer) and total amount of polysiloxane (as part of the hybrid polymer).

The viscosity is preferably in the range of 50 to 10000 mPas, preferably 100 to 1000 mPas as determined by a Brookfield viscosimeter, spindle 4, 20 rpm. The viscosity may be adjusted to suit the desired application form by adding a thickener. Suitable viscosity adjusting and thickening agents are well-known in the art. The particle size as determined by dynamic light scattering (DLS) is preferably in the range of 50 to 500 nm, more preferably 50 to 200 nm. The application drying temperature can range from 0 to 100°C, but preferably is about 10 to 40°C.

In certain embodiments, the aqueous polyurethane/polysiloxane hybrid dispersion has a tensile strength at 100 % elongation in the range of about 1 N/mm² to 20 N/mm², preferably 4 N/mm² to 12 N/mm², and/or wherein the polyurethane/polysiloxane dispersion has a final tensile strength in the range of about 5 N/mm² to 25 N/mm², preferably 15 N/mm² to 25 N/mm²

The aqueous polyurethane/polysiloxane hybrid dispersions described herein may be used as an adhesive or coating, in particular coatings for waterproofing applications, especially outdoor protection of building materials, including but not limited to wood, glass, metals and concrete. Such adhesive or coating compositions can contain further ingredients all of which are well-known in the field. It is however preferred that neither the dispersions nor the final compositions containing the dispersions contain organic solvents and/or additional surfactants. In various embodiments, the dispersions and/or compositions are thus essentially free of organic solvents and/or surfactants.

The coatings containing the dispersions described herein show good weather protection and aging resistance, while being solvent- and surfactant free and thus environmentally friendly.

The coatings can be applied to the substrate by all known techniques, including without limitation, spraying, painting, dip-coating, spin-coating, printing and the like.

It is understood that all embodiments disclosed herein in relation to the methods are similarly applicable to the disclosed dispersions, compositions, and uses and vice versa.

The following examples are given to illustrate the present invention. Because these examples are given for illustrative purposes only, the invention should not be deemed limited thereto.

### Examples

### Example 1:

45 g of polyether polyol polyTHF 2000, 45 g of EO-PDMS block polyol of Mw: 1700 (Silfurf Di-1010, Siltech) and 2,2'-bis(hydroxymethyl)propionic acid (1.00 g) were placed in a 500 ml three necked round bottom flask equipped with a condenser and a mechanical stirrer. Then, the mixture was heated to 85 °C, and at this temperature, a homogenous mixture was obtained. At this point, high vacuum was applied (< o.1 mbar) while the temperature was maintained at 85 °C in order to remove water for 1 h.

After that, vacuum was stopped and the flask was flushed with argon. The temperature was decreased to 60 °C and then 9 g of isophorone diisocyanate (IPDI) and 9 g of methylene bis(4-cyclohexylisocyanat) (H12MDI) were added. The catalyst (8 mg of a freshly prepared tin catalyst / acetone, 1:1 mixture) was added. The heating was set to 85 °C and the mixture was stirred for further 3 hours at this temperature.

Then, the NCO content was measured: 1.30 % NCO (in agreement with the theoretical 1.52 %). The reaction was considered to be finished and the procedure was continued. The reaction was cooled down to 60 °C.

Afterwards, 0.86 g of trimethylamine was added as neutralizer and emulsification was carried out at a temperature below 50 °C by adding 139 g of warm water to obtain a mixture of 5,17 g of 3-(aminopropyl)triethoxysilane. The completion of the chain extension was checked by IR.

After chain extension, a low viscosity emulsion was obtained with a very good particle size (particle size: 76, PDI: 0.149). Finally, the acetone was removed using a rotary evaporator and the final solid content was adjusted to 46 %.

### Example 2:

38.25 g of polyether polyol polyTHF 2000, 6.75 g of EO-PDMS block polyol of Mw:2900 (Silsurf Di-2510, Siltech) and 2,2'-bis(hydroxymethyl)propionic acid (1.25 g) were placed in a 250 ml three necked round bottom flask equipped with a condenser and a mechanical stirrer. Then, the mixture was heated to 85 °C, and at this temperature, a homogenous mixture was obtained. At this point, high vacuum was applied (< 0.1 mbar) while the temperature was maintained at 85 °C in order to remove water for 1 h.

After that, vacuum was stopped and the flask was flushed with argon. The temperature was decreased to 60 °C and then 4.9 g of isophorone diisocyanate (IPDI) and 4.9 g of methylene bis(4-cyclohexylisocyanate) (H12MDI) were added. The catalyst (4 mg of freshly prepared tin catalyst / acetone, 1:1 mixture) was added. The heating was set to 85 °C and the mixture stirred for further 3 hours at this temperature.

Then, NCO content was measured: 1.50 % NCO (in agreement with the theoretical 1.48 %). The reaction was considered to be finished and the procedure was continued. The reaction was cooled down to 60 °C. Afterwards, acetone (45 g, 46 wt%) was added to the prepolymer which is still warm (60 °C) until the prepolymer was completely dissolved.

Then, 0.85 g of trimethylamine was added as neutralizer and the emulsification was carried out at a temperature below 50 °C by adding 62 g of warm water to obtain a mixture 46/54 of PU/water that was stirred mechanically at 400 rpm for 10 min. Then, the emulsion was cooled down to 45 °C and the chain extension was performed by adding a mixture of 1.08 g of 3-(aminopropyl)thriethoxysilane and 0.35 g of ethylenediamine in water. The completion of the chain extension was checked by IR.

After chain extension, a low viscosity emulsion was obtained with a very good particle size (particle size: 126, PDI: 0.201). Finally, the acetone was removed using a rotary evaporator and the final solid content adjusted to 46 %.

### Example 3:

22.5 g of polyether polyol polyTHF 2000, 22.5 g of carbinol-ended PDMS polyol of Mw: 3200 (KF-6002, Shinetsu) and 2,2'-bis(hydroxymethyl)propionic acid (1.5 g) were placed in three necked round bottom flask equipped with a condenser and a mechanical stirrer. Then, the mixture was heated to 85 °C, and at this temperature, a homogenous mixture was obtained. At this point, high vacuum was applied (< 0.1 mbar) while the temperature was maintained at 85 °C in order to remove water for 1 h.

After that, vacuum was stopped and the flask was flushed with argon. The temperature was decreased to 60 °C and then 4.8 g of isophorone diisocyanate (IPDI) and 4.8 g of methylene bis(cyclohexaylisocyanate) (H12MDI) were added. The catalyst (4 mg of freshly prepared tin catalyst / acetone, 1:1 mixture) was added. The heating was set to 85 °C and the mixture was stirred for further 3 hours at this temperature.

Then, NCO content was measured: 1.50 % NCO (in agreement with the theoretical 1.56 %). The reaction was considered to be finished and the procedure was continued. The reaction was cooled to 60 °C. Afterwards, acetone (70 g, 54 wt%) was added to the prepolymer which is still warm (60 °C) until the prepolymer was completely dissolved.

Then, 1.02 g of trimethylamine was added as neutralizer and the emulsification was carried out at a temperature below 50 °C by adding 66 g of warm water to obtain a mixture 46/54 of PU/water that was stirred mechanically at 400 rpm for 10 min. Then, the emulsion was cooled down to 45 °C and the chain extension was performed by adding a mixture of 1.6 g of isophoronediamine (IPDA) in water. The completion of the chain extension was checked by IR.

After chain extension, a low viscosity emulsion was obtained with a very good particle size (particle size: 144, PDI: 0.151). Finally, the acetone was removed using a rotary evaporator and the final solid content was adjusted to 46 %.

### Example 4:

22.5 g of polyether polyTHF 2000, 22.5 g of carbinol-ended PDMA polyol of Mw:1800 (KF-6001, Shinetsu) and 2,2'-bis(hydroxymethyl)propionic acid (1.5 g) were placed in a 250 ml three necked round bottom flask equipped with a condenser and a mechanical stirrer. Then, the mixture was heated to 85 °C, and at this temperature, a homogenous mixture was obtained. At this point, high vacuum was applied (< 0.1 mbar) while the temperature was maintained at 85 °C in order to remove water for 1 h.

After that, vacuum was stopped and the flask was flushed with argon. The temperature was decreased to 60 °C and then 5.5 g of isophorone diisocyanate (IPDI) and 5.5 g of methylene bis(4-cyclohexylisocyanate) (H12MDI) were added. The catalyst (4 mg of freshly prepared tin catalyst /acetone, 1:1 mixture) was added. The heating was set to 85 °C and the mixture was stirred for further 3 hours at this temperature.

Then, the NCO content was measured: 1.65 % NCO (in agreement with the theoretical 1.57 %). The reaction was considered to be finished and the procedure was continued. The reaction mixture was cooled down to 60 °C. Afterwards, acetone (70 g, 56 wt%) was added to the prepolymer which is still warm (60 °C) until the prepolymer was completely dissolved.

Then, 1.06 g of trimethylamine was added as neutralizer and the emulsification was carried out at a temperature below 50 °C by adding 65 g of warm water to obtain a mixture of 46/54 of PU/water that was stirred mechanically at 400 rpm for 10 min. Then, the emulsion was cooled down to 45 °C and the chain extension was performed by adding a mixture of 1.25 g of isophoronediamine (IPDA) in water. The completion of the chain extension was checked by IR.

After chain extension, a low viscosity emulsion was obtained with a very good particle size (particle size: 151, PDI: 0.241). Finally, the acetone was removed using a rotary evaporator and the final solid content was adjusted to 46 %.

### Example 5:

13.5 g of polyether polyol polyTHF 2000, 31.5 g of carbinol-ended PDMS polyol of Mw:1800 (KF-6001, Shinetsu) and 2,2'-bis(hydroxymethyl)propionic acid (2.7 g) were placed in a 250 ml three necked round bottom flask equipped with a condenser and a mechanical stirrer. Then, the mixture was heated to 85 °C, and at this temperature, a homogenous mixture was obtained. At this point, high vacuum was applied (< 0.1 mbar) while the temperature was maintained at 85 °C in order to remove water for 1 h.

After that, vacuum was stopped and the flask was flushed with argon. The temperature was decreased to 60 °C and then 6.7 g of isophorone diisocyanate (IPDI) and 6.7 g of methylene bis(4-cyclohexylcyanate) (H12MDI) were added. The catalyst (4 mg of freshly prepared tin catalyst / acetone, 1:1 mixture) was added. The heating was set to 85 °C and the mixture stirred for further 3 hours at this temperature.

Then, the NCO content was measured: 1.39 % NCO (in agreement with the theoretical 1.55 %). The reaction was considered finished and the procedure was continued. The reaction mixture was cooled down to 60 °C. Afterwards, acetone (50 g, 46 wt%) was added to the prepolymer which is still warm (60 °C) until the prepolymer was completely dissolved.

Then, 1.83 g of trimethylamine was added as neutralizer and the emulsification was carried out at a temperature below 50 °C by adding 77 g of warm water to obtain a mixture 46/54 of PU/water that was stirred mechanically at 400 rpm for 10 min. Then, the emulsion was cooled down to 45 °C and the chain extension was performed by adding a mixture of 0.89 g of isophoronediamine (IPDA) in water.

The completion of the chain extension was checked by IR. After chain extension, a low viscosity emulsion was obtained with a very good particle size (particle size: 216, PDI: 0.087). Finally, the acetone was removed using a rotary evaporator and the final solid content was adjusted to 46 %.

### Example 6:

13.5 g of polyether polyol polyTHF 2000, 31.5 g of carbinol-ended PDMS polyol of Mw:1800 (KF-6001, Shinetsu) and 2,2'-bis(hydroxymethyl)propionic acid (3.35 g) were placed in a 250 ml three necked round bottom flask equipped with a condenser and a mechanical stirrer. Then, the mixture was heated to 85 °C, and at this temperature, a homogenous mixture was obtained. At this point, high vacuum was applied (< 0.1 mbar) while the temperature was maintained at 85 °C in order to remove water for 1 h.

After that, vacuum was stopped and the flask was flushed with argon. The temperature was decreased to 60 °C and then 17.25 g of isophorone diisocyanate (IPDI) were added. The catalyst (4 mg of a freshly prepared tin catalyst / acetone, 1:1 mixture) was added. The heating was set to 85 °C and the mixture was stirred for further 3 hours at this temperature.

Then, the NCO content was measured: 3.65 % NCO (in agreement with the theoretical 3.6 %). The reaction was considered finished and the procedure was continued. The reaction mixture was cooled down to 60 °C. Afterwards, acetone (56 g, 46 wt%) was added to the prepolymer, which is still warm (60 °C), until the prepolymer was completely dissolved.

Then, 2.27 g of trimethylamine was added as a neutralizer and the emulsification was carried out at a temperature below 50 °C by adding 80 g of warm water to obtain a mixture 46/54 of PU/water that was stirred mechanically at 400 rpm for 10 min. Then, the emulsion was cooled down to 45 °C and the chain extension was performed by adding a mixture of 3.37 g of isophoronediamine (IPDA) in water.

The completion of the chain extension was checked by IR. After chain extension, a low viscosity emulsion was obtained with a very good particle size (particle size: 236, PDI: 0.290). Finally, the acetone was removed using a rotary evaporator and the final solid content was adjusted to 46 %.

### Example 7:

6.75 g of polypropyleneglycol polyol (Mw: 2000), 38.25 g of carbinol-ended PDMS polyol of Mw:1800 (KF-6001, Shinetsu) and 2,2'-bis(hydroxymethyl)propionic acid (3.35 g) were placed in a 250 ml three necked round bottom flask equipped with a condenser and a mechanical stirrer. Then, the mixture was heated to 85 °C, and at this temperature, a homogenous mixture was obtained. At this point, high vacuum was applied (< 0.1 mbar) while the temperature was maintained at 85 °C in order to remove water for 1 h.

After that, vacuum was stopped and the flask was flushed with argon. The temperature was decreased to 60 °C and then 16.65 g of isophorone diisocyanate (IPDI) were added. The catalyst (4 mg of a freshly prepared tin catalyst / acetone, 1:1 mixture) was added. The heating was set to 85 °C and the mixture was stirred for further 3 hours at this temperature.

Then, the NCO content was measured: 3.70 % NCO (in agreement with the theoretical 3.74 %). The reaction was considered finished and the procedure was continued. The reaction mixture was cooled down to 60 °C. Afterwards, acetone (54 g, 46 wt%) was added to the prepolymer, which is still warm (60 °C), until the prepolymer was completely dissolved.

Then, 2.27 g of trimethylamine was added as a neutralizer and the emulsification was carried out at a temperature below 50 °C by adding 74 g of warm water to obtain a mixture 46/54 of PU/water that was stirred mechanically at 400 rpm for 10 min. Then, the emulsion was cooled down to 45 °C and the chain extension was performed by adding a mixture of 3.30 g of isophoronediamine (IPDA) in water. The completion of the chain extension was checked by IR.

After chain extension, a low viscosity emulsion was obtained with a very good particle size (particle size: 128, PDI: 0.261). Finally, the acetone was removed using a rotary evaporator and the final solid content was adjusted to 46 %.

### Example 8:

15.6 g of polyether polyol polyTHF 2000, 15.6 g of home-made propyleneglycol-ended PDMS polyol of Mw:2872 and 2,2'-bis(hydroxymethyl)propionic acid (1.04 g) were placed in a 100 ml three necked round bottom flask equipped with a condenser and a mechanical stirrer. Then, the mixture was heated to 85 °C, and at this temperature, a homogenous mixture was obtained. At this point, high vacuum was applied (< 0.1 mbar) while the temperature was maintained at 85 °C in order to remove water for 1 h.

After that, vacuum was stopped and the flask was flushed with argon. The temperature was decreased to 60 °C and then 4.33 g of isophorone diisocyanate (IPDI) and 4.33 g of methylene bis(4-cyclohexylisocyanate) (H12MDI) were added. The catalyst (2 mg of a freshly prepared tin catalyst / acetone, 1:1 mixture) was added. The heating was set to 85 °C and the mixture was stirred for further 3 hours at this temperature.

Then, the NCO content was measured: 3.19 % NCO (in agreement with the theoretical 3.20 %). The reaction was considered finished and the procedure was continued. The reaction mixture was cooled down to 60 °C. Afterwards, acetone (21 g, 35 wt%) was added to the prepolymer, which is still warm (60 °C), until the prepolymer was completely dissolved.

Then, 0.70 g of trimethylamine was added as a neutralizer and the emulsification was carried out at a temperature below 50 °C by adding 47 g of warm water to obtain a mixture 46/54 of PU/water that was stirred mechanically at 400 rpm for 10 min. Then, the emulsion was cooled down to 45 °C and the chain extension was performed by adding a mixture of 1.02 g of isophoronediamine (IPDA) in water.

The completion of the chain extension was checked by IR. After chain extension, a low viscosity emulsion was obtained with a very good particle size (particle size: 128, PDI: 0.261). Finally, the acetone was removed using a rotary evaporator and the final solid content was adjusted to 46 %.

### Example 9: (Polyester)

38.25 g of polyester polyol (Realkyd 2000), 10.58 g of carbinol-ended PDMS polyol of Mw:1800 (KF-6001, Shinetsu) and 2,2'-bis(hydroxymethyl)propionic acid (4.16 g) were placed in a 100 ml three necked round bottom flask equipped with a condenser and a mechanical stirrer. Then, the mixture was heated to 85 °C, and at this temperature, a homogenous mixture was obtained. At this point, high vacuum was applied (< 0.1 mbar) while the temperature was maintained at 85 °C in order to remove water for 1 h.

After that, vacuum was stopped and the flask was flushed with argon. The temperature was decreased to 60 °C and then 14.65 g of isophorone diisocyanate (IPDI) was added. The catalyst (2 mg of a freshly prepared tin catalyst / acetone, 1:1 mixture) was added. The heating was set to 85 °C and the mixture was stirred for further 3 hours at this temperature.

Then, the NCO content was measured: 1.7 % NCO (in agreement with the theoretical 1.68 %). The reaction was considered finished and the procedure was continued. The reaction mixture was cooled down to 60 °C. Afterwards, acetone (79 g, 56 wt%) was added to the prepolymer, which is still warm (60 °C), until the prepolymer was completely dissolved.

Then, 2.8 g of trimethylamine was added as a neutralizer and the emulsification was carried out at a temperature below 50 °C by adding 73 g of warm water to obtain a mixture 46/54 of PU/water that was stirred mechanically at 400 rpm for 10 min. Then, the emulsion was cooled down to 45 °C and the chain extension was performed by adding a mixture of 2.6 g of isophoronediamine (IPDA) in water.

The completion of the chain extension was checked by IR. After chain extension, a low viscosity emulsion was obtained with a very good particle size (particle size: 100, PDI: 0.233). Finally, the acetone was removed using a rotary evaporator and the final solid content was adjusted to 46 %.

### Example 10: (Polycarbonate)

38 g of polycarbonate polyol (Desmophen 3200), 13 g of carbinol-ended PDMS polyol of Mw:1800 (KF-6001, Shinetsu) and 2,2'-bis(hydroxymethyl)propionic acid (4.6 g) were placed in a 100 ml three necked round bottom flask equipped with a condenser and a mechanical stirrer. Then, the mixture was heated to 85 °C, and at this temperature, a homogenous mixture was obtained. At this point, high vacuum was applied (< 0.1 mbar) while the temperature was maintained at 85 °C in order to remove water for 1 h.

After that, vacuum was stopped and the flask was flushed with argon. The temperature was decreased to 60 °C and then 19.5 g of isophorone diisocyanate (IPDI) was added. The catalyst (2 mg of a freshly prepared tin catalyst / acetone, 1:1 mixture) was added. The heating was set to 85 °C and the mixture was stirred for further 3 hours at this temperature.

Then, the NCO content was measured: 3.1 % NCO (in agreement with the theoretical 3.03 %). The reaction was considered finished and the procedure was continued. The reaction mixture was cooled down to 60 °C. Afterwards, acetone (84 g, 56 wt%) was added to the prepolymer, which is still warm (60 °C), until the prepolymer was completely dissolved.

Then, 3.1 g of trimethylamine was added as a neutralizer and the emulsification was carried out at a temperature below 50 °C by adding 81 g of warm water to obtain a mixture 46/54 of PU/water that was stirred mechanically at 400 rpm for 10 min. Then, the emulsion was cooled down to 45 °C and the chain extension was performed by adding a mixture of 2.4 g of isophoronediamine (IPDA) in water.

The completion of the chain extension was checked by IR. After chain extension, a low viscosity emulsion was obtained with a very good particle size (particle size: 236, PDI: 0.24). Finally, the acetone was removed using a rotary evaporator and the final solid content was adjusted to 46 %.

### Example 11: Mechanical properties

In the next table are summarized the mechanical properties measured using the standard testing of ASTM DIN 53504 S3A.

| | **Stress 100 % (N/mm²)** | **Max. stress (N/mm²)** | **Elongation (%)** |
|---|---|---|---|
| **Commercial silicone** | 0.34 | 0.45 | ∼200 |
| **Example 1** | n.d. | n.d. | n.d. |
| **Example 2** | n.d. | n.d. | n.d. |
| **Example** 3 | 2 | 4.5 | >300 |
| **Example 4** | 2 | 11 | 1000 |
| **Example 5** | 3 | 13 | ∼800 |
| **Example 6** | 10.8 | 19 | >400 |
| **Example 7** | 6.8 | 15.5 | ∼600 |
| **Example 8** | 2 | 11 | ∼1100 |
| **Example 9** | 3 | 17.3 | ∼1000 |
| **Example 10** | 6.6 | 21.5 | ∼500 |

| | | | |
|---|---|---|---|
| n.d. = not determined | | | |

## Claims

1. Process for manufacturing an aqueous polyurethane/polysiloxane dispersion comprising the steps of:
(1) forming a polyurethane/polysiloxane prepolymer from a reaction mixture comprising:
(a) at least one polysiloxane polyol with a number average molecular weight Mₙ in the range of 500 g/mol to 10,000 g/mol;
(b) at least one organic polyol with a number average molecular weight Mₙ in the range of 400 g/mol to 10,000 g/mol, preferably 1000 g/mol to 3000 g/mol;
(c) at least one stabilizer; and
(d) at least one polyisocyanate, wherein the at least one polyisocyanate is used in molar excess relative to the hydroxy groups of the other components of the reaction mixture to obtain a polyurethane/polylsiloxane prepolymer;
(2) dispersing the prepolymer obtained from step (1) into a continuous aqueous phase to obtain an emulsion; and
(3) reacting the prepolymer with at least one chain extension agent,
wherein the aqueous polyurethane/polysiloxane dispersion is essentially free of organic solvent.

2. The process according to claim 1 , wherein the at least one organic polyol comprises
a. a polyether polyol; and/or
b. a polyester polyol; and/or
c. a polycarbonate polyol.

3. The process according to claim 2, wherein:
(a) the polyester polyol has an average number molecular weight Mₙ of 400 to 5000 g/mol, preferably 500 to 3000 g/mol, more preferably 800 to 2500 g/mol, most preferably 1000 to 2000 g/mol; and/or
(b) the polyether polyol is a polyalkylene glycol homo- or copolymer, preferably a polypropylene glycol homo- or copolymer, a polyethylene glycol homo- or copolymer, or a polypropylenglycol/polyethyleneglycol block copolymer; and/or
(c) the polyether polyol has an average number molecular weight Mₙ of 1000 to 4000, preferably 1000 to 3000 g/mol.

4. The process according to any one of claims 1 to 3, wherein the weight ratio of polysiloxane polyol to organic polyol is within the range of 99:1 to 1:99, preferably 85:15 to 15:85.

5. The process according to any one of claims 1 to 4, wherein the at least one stabilizer comprises or consists of an anionic stabilizer and optionally a nonionic stabilizer, wherein optionally the anionic stabilizer is an dihydroxy acid, preferably a sulfonated polyglycol and/or 2,2-bis(hydroxymethyl)propionic acid (DMPA); and/or wherein optionally the nonionic stabilizer is a polyoxyalkylene glycol, preferably polyethylene glycol, polypropylene glycol or polyethylene/polypropylene glycol.

6. The process according to any one of claims 1 to 5, wherein
(1) the at least one polyisocyanate is used in molar excess relative to the hydroxy groups of the combined polyols, the OH/NCO equivalent ratio preferably being 1:1.1 to 1:4, and/or
(2) the at least one polyisocyanate is at least one diisocyanate or triisocyanate, preferably selected from the group consisting of isophorone diisocyanate (IPDI), hexamethylene diisocyanate (HDI), polymeric polyisocyanates based on IPDI or HDI, and mixtures thereof.

7. The process according to any one of claims 1 to 6, wherein the polyurethane/polysiloxane prepolymer has an average number molecular weight Mₙ of 1000 to 10000, preferably 2000 to 6000 g/mol.

8. The process according to any one of claims 1 to 7, wherein the polysiloxane polyol is a polydimethylsiloxane polyol.

9. The process according to any one of claims 1 to 8, wherein the reaction mixture further comprises a catalyst, preferably a tin-based catalyst.

10. The process according to any one of claims 1 to 9, wherein step (2) comprises emulsifying the prepolymer into a continuous aqueous phase, preferably water, by mechanical stirring.

11. Aqueous polyurethane/polysiloxane dispersion obtainable according to a process of any one of claims 1 to 10, optionally having a solid content of 20 to 70 wt.-%, preferably 40 to 50 wt.-%.

12. Adhesive or coating composition, comprising the aqueous polyurethane/polysiloxane dispersion according to claim 11.

13. Use of the aqueous polyurethane/polysiloxane dispersion according to claim 12 in an adhesive or coating composition.

## Patentansprüche

1. Vorgang zum Herstellen einer wässrigen Polyurethan/Polysiloxandispersion, umfassend die Schritte von:
(1) Ausbilden eines Polyurethan/Polysiloxan-Präpolymers aus einem Reaktionsgemisch, umfassend:
(a) mindestens ein Polysiloxanpolyol mit einem zahlenmittleren Molekulargewicht Mₙ in
dem Bereich von 500 g/mol bis 10.000 g/mol;
(b) mindestens ein organisches Polyol mit einem zahlenmittleren Molekulargewicht Mₙ in dem Bereich von 400 g/mol bis 10.000 g/mol, vorzugsweise 1.000 g/mol bis 3.000 g/mol;
(c) mindestens einen Stabilisator; und
(d) mindestens ein Polyisocyanat, wobei das mindestens eine Polyisocyanat in einem molaren Überschuss bezogen auf die Hydroxygruppen der anderen Komponenten des Reaktionsgemischs verwendet wird, um ein Polyurethan/Polysiloxan-Präpolymer zu erhalten;
(2) Dispergieren des aus Schritt (1) erhaltenen Präpolymers in eine kontinuierliche wässrige Phase, um eine Emulsion zu erhalten; und
(3) Umsetzen des Präpolymers mit mindestens einem Kettenverlängerungsmittel, wobei die wässrige Polyurethan/Polysiloxandispersion im Wesentlichen frei von organischem Lösungsmittel ist.

2. Vorgang nach Anspruch 1, wobei das mindestens eine organische Polyol umfasst
a. ein Polyetherpolyol; und/oder
b. ein Polyesterpolyol; und/oder
c. ein Polycarbonatpolyol.

3. Vorgang nach Anspruch 2, wobei:
(a) das Polyesterpolyol ein durchschnittliches Zahlenmolekulargewicht Mₙ von 400 bis 5.000 g/mol, vorzugsweise 500 bis 3.000 g/mol, weiter bevorzugt 800 bis 2.500 g/mol, am meisten bevorzugt 1.000 bis 2.000 g/mol aufweist; und/oder
(b) das Polyetherpolyol ein Polyalkylenglykol-Homo- oder -Copolymer, vorzugsweise ein Polypropylenglykol-Homo- oder -Copolymer, ein Polyethylenglykol-Homo- oder - Copolymer oder ein Polypropylenglykol/Polyethylenglykol-Blockcopolymer ist; und/oder
(c) das Polyetherpolyol ein durchschnittliches Zahlenmolekulargewicht Mₙ von 1.000 bis 4.000, vorzugsweise 1.000 bis 3.000 g/mol, aufweist.

4. Vorgang nach einem der Ansprüche 1 bis 3, wobei das Gewichtsverhältnis von Polysiloxanpolyol zu organischem Polyol innerhalb des Bereichs von 99:1 bis 1:99, vorzugsweise 85:15 bis 15:85 liegt.

5. Vorgang nach einem der Ansprüche 1 bis 4, wobei der mindestens eine Stabilisator einen anionischen Stabilisator und optional einen nichtionischen Stabilisator umfasst oder daraus besteht, wobei optional der anionische Stabilisator eine Dihydroxysäure, vorzugsweise ein sulfoniertes Polyglykol und/oder 2,2-Bis(hydroxymethyl)propionsäure (DMPA) ist; und/oder
wobei optional der nichtionische Stabilisator ein Polyoxyalkylenglykol, vorzugsweise Polyethylenglykol, Polypropylenglykol oder Polyethylen/Polypropylenglykol ist.

6. Vorgang nach einem der Ansprüche 1 bis 5, wobei
(1) das mindestens eine Polyisocyanat in molarem Überschuss bezogen auf die Hydroxygruppen der kombinierten Polyole verwendet wird, das OH/NCO-Äquivalentverhältnis vorzugsweise 1:1,1 bis 1:4 beträgt, und/oder
(2) das mindestens eine Polyisocyanat mindestens ein Diisocyanat oder Triisocyanat ist, vorzugsweise ausgewählt aus der Gruppe bestehend aus Isophorondiisocyanat (IPDI), Hexamethylendiisocyanat (HDI), polymeren Polyisocyanaten auf der Basis von IPDI oder HDI und Gemischen davon.

7. Vorgang nach einem der Ansprüche 1 bis 6, wobei das Polyurethan/Polysiloxan-Präpolymer ein durchschnittliches Zahlenmolekulargewicht Mₙ von 1.000 bis 10.000, vorzugsweise 2.000 bis 6.000 g/mol aufweist.

8. Vorgang nach einem der Ansprüche 1 bis 7, wobei das Polysiloxanpolyol ein Polydimethylsiloxanpolyol ist.

9. Vorgang nach einem der Ansprüche 1 bis 8, wobei das Reaktionsgemisch ferner einen Katalysator, vorzugsweise einen Katalysator auf Zinnbasis, umfasst.

10. Vorgang nach einem der Ansprüche 1 bis 9, wobei Schritt (2) ein Emulgieren des Präpolymers in eine kontinuierliche wässrige Phase, vorzugsweise Wasser, durch mechanisches Rühren umfasst.

11. Wässrige Polyurethan/Polysiloxandispersion, erhältlich gemäß einem Vorgang nach einem der Ansprüche 1 bis 10, optional mit einem Feststoffgehalt von 20 bis 70 Gew.-%, vorzugsweise 40 bis 50 Gew.-%.

12. Klebstoff- oder Beschichtungszusammensetzung, umfassend die wässrige Polyurethan/Polysiloxandispersion nach Anspruch 11.

13. Verwendung der wässrigen Polyurethan/Polysiloxandispersion nach Anspruch 12 in einer Klebstoff- oder Beschichtungszusammensetzung.

## Revendications

1. Procédé de fabrication d'une dispersion aqueuse de polyuréthane/polysiloxane comprenant les étapes suivantes :
(1) formation d'un prépolymère de polyuréthane/polysiloxane à partir d'un mélange réactionnel comprenant :
(a) au moins un polyol de polysiloxane ayant une masse moléculaire moyenne en nombre Mₙ dans
la plage allant de 500 g/mol à 10 000 g/mol ;
(b) au moins un polyol organique ayant une masse moléculaire moyenne en nombre Mₙ comprise dans la plage allant de 400 g/mol à 10 000 g/mol, de préférence de 1 000 g/mol à 3 000 g/mol ;
(c) au moins un agent stabilisant ; et
(d) au moins un polyisocyanate, ledit polyisocyanate étant utilisé en excès molaire par rapport aux groupes hydroxy des autres composants du mélange réactionnel pour obtenir un prépolymère de polyuréthane/polylsiloxane ;
(2) la dispersion du prépolymère obtenu à l'étape (1) dans une phase aqueuse continue pour obtenir une émulsion ; et
(3) la réaction du prépolymère avec au moins un agent d'allongement de chaîne, la dispersion aqueuse de polyuréthane/polysiloxane étant essentiellement exempte de solvant organique.

2. Procédé selon la revendication 1, dans lequel ledit polyol organique comprend
a. un polyol de polyéther ; et/ou
b. un polyol de polyester ; et/ou
c. un polyol de polycarbonate.

3. Procédé selon la revendication 2, dans lequel :
(a) le polyol de polyester a une masse moléculaire moyenne en nombre Mₙ de 400 à 5 000 g/mol, de préférence de 500 à 3 000 g/mol, de préférence encore de 800 à 2 500 g/mol, idéalement de 1 000 à 2 000 g/mol ; et/ou
(b) le polyol de polyéther est un homo- ou un co-polymère de polyalkylèneglycol, de préférence un homo- ou un co-polymère de polypropylèneglycol, un homo- ou un co-polymère de polyéthylèneglycol ou un copolymère séquencé de polypropylèneglycol/polyéthylèneglycol ; et/ou
(c) le polyol de polyéther a une masse moléculaire moyenne en nombre Mₙ de 1 000 à 4 000, de préférence de 1 000 à 3 000 g/mol.

4. Procédé selon l'une quelconque des revendications 1 à 3, dans lequel le rapport pondéral du polyol de polysiloxane au polyol organique est compris dans la plage allant de 99:1 à 1:99, de préférence de 85:15 à 15:85.

5. Procédé selon l'une quelconque des revendications 1 à 4, dans lequel ledit agent stabilisant comprend ou consiste en un agent stabilisant anionique et éventuellement un agent stabilisant non ionique, l'agent stabilisant anionique étant éventuellement un acide dihydroxy, de préférence un polyglycol sulfoné et/ou l'acide 2,2-bis(hydroxyméthyl)propionique (DMPA) ; et/ou
dans lequel l'agent stabilisant non ionique est éventuellement un polyoxyalkylèneglycol, de préférence un polyéthylèneglycol, un polypropylèneglycol ou un polyéthylène/polypropylèneglycol.

6. Procédé selon l'une quelconque des revendications 1 à 5, dans lequel
(1) ledit polyisocyanate est utilisé en excès molaire par rapport aux groupes hydroxy des polyols combinés, le rapport équivalent OH/NCO étant de préférence de 1:1,1 à 1:4, et/ou
(2) ledit polyisocyanate est au moins un diisocyanate ou triisocyanate, de préférence choisi dans le groupe constitué par le diisocyanate d'isophorone (IPDI), le diisocyanate d'hexaméthylène (HDI), les polyisocyanates polymères basés sur IPDI ou HDI et leurs mélanges.

7. Procédé selon l'une quelconque des revendications 1 à 6, dans lequel le prépolymère polyuréthane/polysiloxane a une masse moléculaire moyenne en nombre Mₙ de 1 000 à 10 000, de préférence de 2 000 à 6 000 g/mol.

8. Procédé selon l'une quelconque des revendications 1 à 7, dans lequel le polyol de polysiloxane est un polyol de polydiméthylsiloxane.

9. Procédé selon l'une quelconque des revendications 1 à 8, dans lequel le mélange réactionnel comprend en outre un catalyseur, de préférence un catalyseur à base d'étain.

10. Procédé selon l'une quelconque des revendications 1 à 9, dans lequel l'étape (2) comprend l'émulsion du prépolymère dans une phase aqueuse continue, de préférence de l'eau, par agitation mécanique.

11. Dispersion aqueuse de polyuréthane/polysiloxane pouvant être obtenue selon un procédé selon l'une quelconque des revendications 1 à 10, ayant éventuellement une teneur en solides de 20 à 70 % en poids, de préférence 40 à 50 % en poids.

12. Composition adhésive ou de revêtement, comprenant la dispersion aqueuse de polyuréthane/polysiloxane selon la revendication 11.

13. Utilisation de la dispersion aqueuse de polyuréthane/polysiloxane selon la revendication 12 dans une composition adhésive ou de revêtement.
